# EUROPÄISCHE PATENTSCHRIFT

(11) **EP 3 159 180 B1**
(45) Veröffentlichungstag und Bekanntmachung des Hinweises auf die Patenterteilung: **29.04.2020**
(21) Anmeldenummer: 16193625.7
(22) Anmeldetag: 13.10.2016
(51) Int. Cl.: B60B 33/00, B60B 33/02

(54) **ROLLE FÜR VERFAHRBARE GEGENSTÄNDE**
ROLLER FOR MOVEABLE OBJECTS
ROULEAU POUR OBJETS MOBILES

(30) Priorität: 19.10.2015 DE 102015013415
(43) Veröffentlichungstag der Anmeldung: 26.04.2017
(73) Patentinhaber: AS Rollen GmbH, 42499 Hückeswagen (DE)
(72) Erfinder:
(74) Vertreter: Döpp, Ludger

(56) Entgegenhaltungen:
- EP-A1- 1 534 541
- DE-A1- 2 937 540
- DE-A1-102010 035 515
- US-A- 5 503 416
- US-A1- 2014 238 784

## Beschreibung

Die Erfindung betrifft eine Rolle für verfahrbare Gegenstände, insbesondere eine Bettenrolle gemäß den gattungsbildenden Merkmalen des Anspruchs 1.

Der DE 10 2010 035 515 A1 ist eine Rolle für verfahrbare Gegenstände, insbesondere eine Bettenrolle, zu entnehmen, zumindest beinhaltend ein Laufrad, eine selbiges aufnehmende Gabel, ein Führungsrohr, das über mindestens ein Lager relativ zur Gabel schwenkbar ausgebildet ist, ein mit dem Laufrad in Wirkverbindung bringbares, zumindest aus einem Bremshebel und einem innerhalb des Führungsrohrs positionierten Feststellelement gebildetes Bremssystem, sowie gabelseitig vorgesehene Verriegelungsmittel, wobei zur Festlegung der Gabel relativ zum Führungsrohr, die mit Profilen versehenen Verriegelungsmittel durch Betätigung des Feststellelements dergestalt miteinander in Wirkverbindung bringbar sind, dass eine im Wesentlichen spielfreie Arretierung zwischen der Gabel und dem Führungsrohr gegeben ist.

Das innerhalb eines Zapfens geführte Feststellelement ist sechseckig ausgebildet, wobei der Zapfen im Führungsbereich mit einer gleichartigen Innenkontur versehen ist. Zwischen Zapfen und Feststellelement wird in dem sechseckigen Führungsbereich eine Verdrehsicherung gebildet. Diese seit Jahrzehnten eingesetzte Art der Verdrehsicherung ist in der Herstellung aufwendig, da zumindest die Innenkontur des Zapfens einerseits gedreht und andererseits geräumt werden muss. Aufzubringende verschleißfeste Beschichtungen sind ebenfalls problematisch. Bereits geringe Toleranzabweichungen im Führungsbereich führen zu unerwünschten Winkelausschlägen der Laufrolle. Problematisch bei dieser Ausgestaltung ist auch der Einsatz von Kunststoffbauteilen.

Die DE 29 37 540 A1 beschreibt eine blockierbare Lenkrolle für Apparate, Möbel, Krankenbetten oder dergleichen, bei der die Achslagerwangen eines um die Längsachse eines Rückenbolzens schwenkbaren Tragteils einen wenigstens ein Arretierorgan aufweisenden Schwenkhebel zwischen sich lagern, der von dem vertikal verstellbar angeordneten Rückenbolzen betätigbar ist. Die Achslagerwangen weisen nur einen geringen Abstand voneinander auf, den Schwenkhebel radachsnah lagern und die endseitig je ein Laufrad tragende Radachse etwa mittig haltern, wobei der Schwenkhebel und der untere Abschnitt des Rückenbolzens im Überdeckungsbereich der Laufräder zwischen diesen angeordnet sind und wobei der Schwenkhebel als Arretierorgan sich etwa radachsparallel erstreckende Flügel aufweist, die an einen inneren Kreisring der im Wesentlichen schalenförmigen Laufräder anlegbar sind.

Durch die EP 1 534 541 A1 veröffentlicht als WO 2004/028835 A1 ist eine Lenkrolle mit einem Laufrad, bspw. für einen Müllcontainer bekannt geworden, beinhaltend eine Feststellvorrichtung und eine Radgabel, in der ein Laufrad aufgenommen ist, wobei die über einen Schaltnocken betätigbare Feststellvorrichtung in einem Führungsgehäuse gelagert ist, das seinerseits an einer mit der Radgabel verbundenen Montageplatte gehaltert ist, wobei darüber hinaus das Führungsgehäuse aus zwei entlang einer Vertikalen zusammenwirkenden Gehäusehälften besteht und die Gehäusehälften durch ein Umfassungselement zusammengehalten sind. Das Umfassungselement ist als ober- und/oder unterhalb der Montageplatte horizontal angeordneter Ringkörper ausgebildet.

Ziel des Erfindungsgegenstandes ist es, eine vom Stand der Technik abweichende alternative Verdrehsicherung für Laufrollen unterschiedlichster Bauart bereitzustellen, die nicht mehr mit den vorabstehenden Nachteilen behaftet ist.

Dieses Ziel wird dadurch erreicht, dass das Bremssystem ein im Wesentlichen zylindrisch ausgebildetes, einseitig profiliertes Feststellelement beinhaltet, das zur Bildung der Verdrehsicherung gabelseitig mit einem mehreckigen Sicherungselement in Wirkverbindung bringbar ist, wobei das am Feststellelement vorgesehene Profil im Wesentlichen der äußeren Kontur des Sicherungselements entspricht und das Profil im Einbauzustand das Sicherungselement zumindest partiell übergreift, wobei das Sicherungselement nach Art einer Sechskantmutter ausgebildet ist.

Vorteilhafte Weiterbildungen des Erfindungsgegenstandes sind den Unteransprüchen zu entnehmen.

Abweichend zum Stand der Technik wird somit eine alternative Verdrehsicherung bereitgestellt, die mit einfachen, auch aus Kunststoff bestehenden, Bauteilen realisiert werden kann. Bedingt durch die großen Flächenanteile des am Feststellelement vorgesehenen Profils/Sicherungselements wirken sich hier toleranzbedingte Abweichungen nicht mehr so wie beim Stand der Technik aus.

Die Ausgestaltungsform des Erfindungsgegenstandes sieht vor, dass das Sicherungselement nach Art einer Sechskantmutter ausgebildet ist. Hier können somit handelsübliche Bauteile verwendet werden.

Einem weiteren Gedanken der Erfindung gemäß kann das Feststellelement innerhalb eines, mit einer zylindrischen Bohrung versehenen Zapfens geführt werden, wobei zwischen der Bohrung und der äußeren Umfangsfläche des zylindrisch ausgebildeten Feststellelements ein Gleitelement vorgesehen sein kann.

Dieses hülsenartig ausgebildete Gleitelement kann bedarfsweise aus einem Kunststoff, insbesondere PTFE, bestehen.

Der Erfindungsgegenstand ist anhand eines Ausführungsbeispiels in der Zeichnung dargestellt und wird wie folgt beschrieben. Es zeigen
- Fig. 1: Prinzipskizze einer Rolle für verfahrbare Gegenstände;
- Fig. 2 u. Fig. 3: unterschiedliche Ansichten der Gabel gemäß Fig. 1 mit dargestellter Verdrehsicherung.

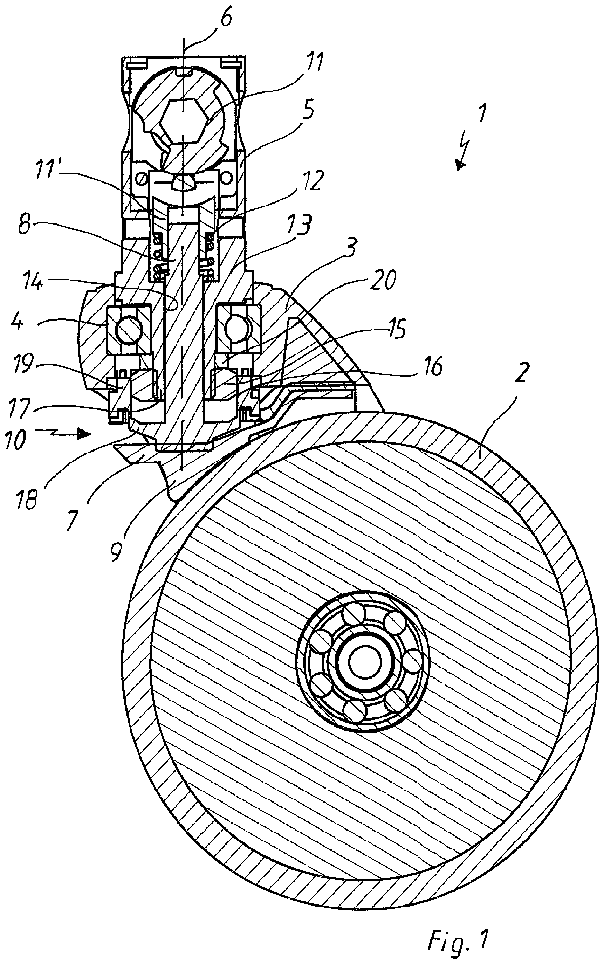

Figur 1 zeigt eine erfindungsgemäße Rolle 1, die vom Aufbau her in etwa derjenigen der DE 10 2010 035 515 A1 entspricht.

Folgende Bauelemente sind erkennbar: ein Laufrad 2, eine selbiges aufnehmende Gabel 3, die über ein Rollenlager 4 relativ zu einem Führungsrohr 5 um eine vertikale Achse 6 schwenkbar ausgebildet ist. Mit dem Laufrad 2 ist ein, zumindest auf einem Bremshebel 7 und einem innerhalb des Führungsrohrs 5 positionierten Feststellelement 8 gebildetes Bremssystem in Wirkverbindung bringbar. Der Bremshebel 7 ist außerhalb des Laufrads 2 im Bereich seines freien Endes 9 am gabelseitigen Endbereich 10 des Feststellelements 8 festlegbar. Über einen in diesem Beispiel als Sechskantexzenter ausgebildeten Exzenter 11 sowie ein damit in Wirkverbindung stehendes Exzenterdruckstück 11' kann das Feststellelement 8 nur in vertikaler Richtung relativ zum stationären Führungsrohr 5 bewegt werden, so dass der Bremshebel 7 entweder auf dem Laufrad 2 aufgedrückt oder aber von selbigem entfernt werden kann. Das Exzenterdruckstück 11' ist hierbei fest, bspw. durch Verschraubung, mit dem einen Ende des Feststellelements 8 verbunden und dient als Stützfläche für ein Federelement 12. Das Führungsrohr 5 wirkt gabelseitig mit einem Zapfen 13 zusammen, der auch das Rollenlager 4 aufnimmt. Das Feststellelement 8, das in diesem Beispiel zylindrisch ausgebildet ist, wird innerhalb einer ebenfalls zylindrisch ausgebildeten Bohrung 14 des Zapfens 13 geführt.

Zur Bildung einer Verdrehsicherung sind folgende Bauteile gegeben: einerseits ein in diesem Beispiel als Sechskantmutter ausgebildetes Sicherungselement 15 samt Außenkontur 16, die auf das freie Ende 17 des Zapfens 13 verdrehsicher aufgeschraubt ist. Anstelle der Sechskantmutter kann bedarfsweise auch ein drei-, vier- oder fünfeckiger Körper zum Einsatz gelangen. Bedarfsweise kann hier auch ein Klebstoff eingesetzt werden, um somit die Verdrehsicherheit zu erhöhen.

Am, dem Laufrad 2 zugewandten Ende des Feststellelementes 8, ist ein Profil 18 angeformt. Der freie Endbereich 19 des Profils 18 übergreift wesentliche Flächenteile der Sechskantmutter 16 in axialer Richtung. Somit wird abweichend vom Stand der Technik eine alternative einfach bauende Verdrehsicherung bereitgestellt. Bedarfsweise kann das Feststellelement 8 als aus Kunststoff bestehendes Spritzgussteil hergestellt werden.

Hier nicht dargestellt, jedoch für bestimmte Einsatzfälle denkbar, ist es möglich, zwischen der Bohrung 14 und dem Feststellelement 8 ein Gleitlager vorzusehen. Um Höhentoleranzen ausgleichen zu können, kann bedarfsweise zwischen dem Rollenlager 4 und der Sechskantmutter 16 noch eine Unterlegscheibe 20 vorgesehen werden.

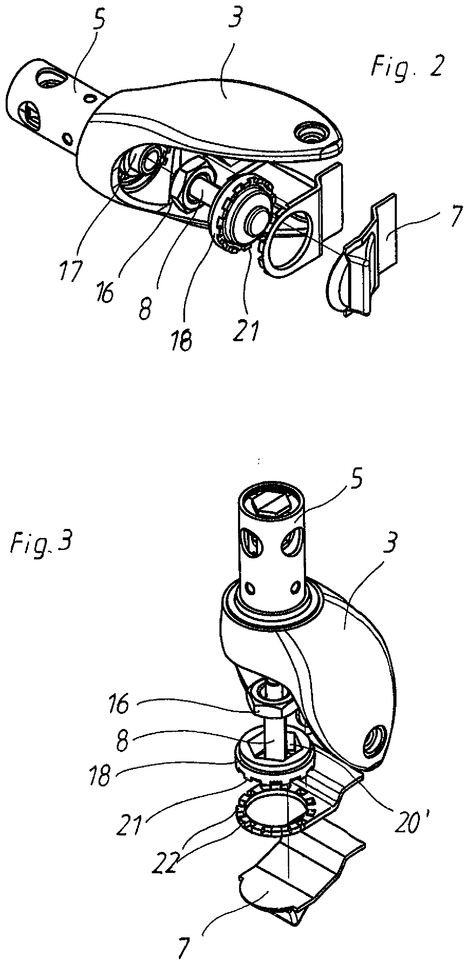

Die Fig. 2 und 3 zeigen in verschiedenen Ansichten einerseits die Gabel 3 samt Führungsrohr 5 in Wirkverbindung mit der in Fig. 1 angesprochenen Verdrehsicherung. Erkennbar sind folgende Bauteile: das freie Ende 17 des hier nicht erkennbaren Zapfens, die darauf aufschraubbare Sechskantmutter 16, das zylindrisch ausgebildete Feststellelement 8, das Profil 18 sowie der Innensechskant 20' des Profils 18, der zur Bildung der Verdrehsicherung über die Sechkantmutter 16 zumindest partiell geschoben werden kann.

Am Profil 18 sind darüber hinaus noch Zahnelemente 21 vorgesehen, die in ein mit dem Bremshebel 7 zusammenwirkendes Gegenprofil 22 eingreifen, wobei nach Betätigung der Bremse die Laufrolle dann festgelegt ist.

### Bezugszeichenliste

- 1: Rolle
- 2: Laufrad
- 3: Gabel
- 4: Rollenlager
- 5: Führungsrohr
- 6: Achse
- 7: Bremshebel
- 8: Feststellelement
- 9: freies Ende
- 10: Endbereich
- 11: Exzenter
- 11': Exzenterdruckstück
- 12: Federelement
- 13: Zapfen
- 14: Bohrung
- 15: Sechskantmutter (Sicherungselement)
- 16: Außenkontur
- 17: freies Ende
- 18: Profil
- 19: Endbereich
- 20: Unterlegscheibe
- 20': Innensechskant
- 21: Zahnelement
- 22: Gegenprofil

## Patentansprüche

1. Rolle für verfahrbare Gegenstände, insbesondere Bettenrolle, zumindest beinhaltend ein Laufrad (2), eine selbiges aufnehmende Gabel (3), ein Führungsrohr (5), das über mindestens ein Lager (4) relativ zur Gabel (3) schwenkbar ausgebildet ist, gabelseitig vorgesehene Verriegelungsmittel sowie ein mit dem Laufrad (2) in Wirkverbindung bringbares, verdrehsicher ausgebildetes Bremssystem (7), wobei das Bremssystem (7) ein im Wesentlichen zylindrisch ausgebildetes, einseitig profiliertes Feststellelement (8) beinhaltet, das zur Bildung der Verdrehsicherung gabelseitig mit einem mehreckigen Sicherungselement (15) in Wirkverbindung bringbar ist, wobei ein am Feststellelement (8) vorgesehenes Profil (18) im Wesentlichen der äußeren Kontur des Sicherungselements (15) entspricht, **dadurch gekennzeichnet, dass** das Profil (18) im Einbauzustand das Sicherungselement (15) zumindest partiell übergreift, wobei das Sicherungselement (15) nach Art einer Sechskantmutter ausgebildet ist.

2. Rolle nach einem Anspruch 1, **dadurch gekennzeichnet, dass** das aus Kunststoff bestehende Feststellelement (8) innerhalb eines mit einer zylindrischen Bohrung (14) versehenen Zapfens (13) geführt ist, wobei zwischen der Bohrung (14) und der äußeren Umfangsfläche des zylindrisch ausgebildeten Feststellelements (8) ein Gleitelement vorgesehen ist.

3. Rolle nach Anspruch 2, **dadurch gekennzeichnet, dass** das hülsenartig ausgebildete Gleitelement aus Kunststoff, insbesondere PTFE, besteht.

## Claims

1. A roller for moveable objects, in particular a bed castor, at least comprising a wheel (2), a fork (3) receiving the same one, a guiding tube (5) which can be pivoted with respect to the fork (3) via at least one bearing (4), locking means provided on the side of the fork as well as a rotation-proof brake system (7) that can be operatively connected to the wheel (2), wherein the brake system (7) comprises an essentially cylindrical fixing element (8) which is profiled on one side and can be operatively connected to a polygonal safety element (15) on the side of the fork for forming the rotation lock, wherein a profile (18) provided on the fixing element (8) essentially corresponds to the outer contour of the safety element (15), **characterized in that** in the installed condition the profile (18) at least partially overlaps the safety element (15), wherein the safety element (15) is designed like a hexagonal nut.

2. A roller according to claim 1, **characterized in that** the fixing element (8) made of plastic is guided inside a stud (13) which is provided with a cylindrical bore (14), wherein a sliding element is provided between the bore (14) and the outer circumferential surface of the cylindrical fixing element (8).

3. A roller according to claim 2, **characterized in that** the sliding element which is designed like a sleeve is made of plastic, in particular of PTFE.

## Revendications

1. Rouleau pour des objets déplaçables, notamment une roulette de lit, au moins comprenant une roue (2), une fourche (3) recevant celle-ci, un tube de guidage (5), qui peut être pivoté via au moins un palier (4) par rapport à la fourche (3), des moyens de verrouillage prévus sur le côté de la fourche, ainsi qu'un système de freinage immobilisé en rotation (7), qui peut être amené en liaison active avec la roue (2), dans lequel le système de freinage (7) comprend un élément d'arrêt (8) essentiellement cylindrique, qui est profilé d'un côté,' et qui peut être amené en liaison active avec un élément de sécurité (15) polygonal du côté de la fourche, un profilé (18) prévu sur l'élément d'arrêt (8) correspondant essentiellement au contour extérieur de l'élément de sécurité, **caractérisé en ce qu'**en état monté le profilé (18) chevauche au moins partiellement l'élément de sécurité (15, l'élément de sécurité (15) étant configuré comme un écrou hexagonal.

2. Rouleau selon la revendication 1, **caractérisé en ce que** l'élément d'arrêt (8) fabriqué en plastique est guidé à l'intérieur d'un tenon (13), qui est muni d'un trou de forage cylindrique (14), dans lequel un élément de glissement est prévu entre le trou de forage cylindrique (14) et la surface circonférentielle extérieure de l'élément d'arrêt (8) cylindrique.

3. Rouleau selon la revendication 2, **caractérisé en ce que** l'élément de glissement configuré en forme de douille est fabriqué en plastique, notamment en PTFE.
